# EUROPEAN PATENT APPLICATION

(11) **EP 4 312 214 A1**
(43) Date of publication of application: **31.01.2024**
(21) Application number: 23183480.5
(22) Date of filing: 05.07.2023
(51) Int. Cl.: G10L 25/03, G10L 21/0308, G10L 19/008, H04R 1/40, H04R 3/00

(54) **DETERMINING SPATIAL AUDIO PARAMETERS**

(30) Priority: 28.07.2022 GB 202211013
(71) Applicant: Nokia Technologies Oy, 02610 Espoo (FI)
(72) Inventor: VILERMO, Miikka Tapani, Siuro (FI); VESA, Sampo, Helsinki (FI); VÄÄNÄNEN, Riitta Elina, Helsinki (FI); MÄKINEN, Jonne Juhani, Tampere (FI)
(74) Representative: Nokia EPO representatives

(57) **Abstract**

Examples of the disclosure provide methods of determining spatial audio parameters that are robust to noise levels. In examples of the disclosure two or more audio signals are obtained and processed to generate spatial audio signals. A noise amount in the audio signals is determined. One or more spatial audio parameters are determined wherein the process used to determine the one or more spatial audio parameters is dependent upon a value of the determined noise amount.

## Description

### TECHNOLOGICAL FIELD

Examples of the disclosure relate to determining spatial audio parameters. Some relate to determining spatial audio parameters in the presence of noise.

### BACKGROUND

Noise such as wind noise or other types of incoherent noise can be problematic in sound recordings. This noise can affect the accuracy with which spatial audio parameters can be determined. This can result in lower quality spatial audio.

### BRIEF SUMMARY

According to various, but not necessarily all, examples of the disclosure there may be provided an apparatus comprising means for:
obtaining two or more audio signals and processing the audio signals to generate spatial audio signals;
determining a noise amount in the audio signals;
determining one or more spatial audio parameters wherein the process used to determine the one or more spatial audio parameters is dependent upon a value of the determined noise amount.

The process used to determine the one or more spatial audio parameters may be dependent upon whether a value of the determined noise amount is above or below a threshold.

The means may be for estimating the one or more spatial audio parameters if the value of the determined noise amount is below a threshold.

The means may be for using a predetermined value for the one or more spatial audio parameters if the value of the determined noise amount is above a threshold.

The spatial audio parameters may comprise at least a direction parameter and a diffuseness parameter.

The means may be for estimating the direction parameter and the diffuseness parameter if the value of the determined noise amount is below a lower threshold.

The means may be for estimating the direction parameter and using a recent estimation of the diffuseness parameter if the value of the determined noise amount is above a lower threshold but below an upper threshold.

The means may be for using a predetermined direction parameter and a recent estimation of the diffuseness parameter if the value of the determined noise amount is above an upper threshold.

The spatial audio parameters may comprise at least a first direction parameter and a second direction parameter.

The means may be for estimating the first direction parameter and the second direction parameter if the value of the determined noise amount is below a lower threshold.

The means may be for estimating the first direction parameter and using a predetermined angular difference to the first direction parameter to determine the second parameter if the value of the determined noise amount is above a lower threshold but below an upper threshold.

The means may be for using a predetermined first direction parameter and a predetermined angular difference to the first direction parameter to determine the second parameter if the value of the determined noise amount is above an upper threshold.

The predetermined first direction may be determined based upon a use case of a device comprising microphones.

According to various, but not necessarily all, examples of the disclosure there may be provided a device comprising an apparatus as described herein, wherein the device comprises two or more microphones.

The device may be one of: a handheld electronic device, a headset, a face covering.

According to various, but not necessarily all, examples of the disclosure there may be provided a method comprising:
obtaining two or more audio signals and processing the audio signals to generate spatial audio signals;
determining a noise amount in the audio signals;
determining one or more spatial audio parameters wherein the process used to determine the one or more spatial audio parameters is dependent upon a value of the determined noise amount.

According to various, but not necessarily all, examples of the disclosure there may be provided a computer program comprising computer program instructions that, when executed by processing circuitry, cause:
obtaining two or more audio signals and processing the audio signals to generate spatial audio signals;
determining a noise amount in the audio signals;
determining one or more spatial audio parameters wherein the process used to determine the one or more spatial audio parameters is dependent upon a value of the determined noise amount.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIGS. 1A to 1C show example devices;
FIG. 2 shows an example method;
FIG. 3 shows an example device;
FIG. 4 shows an example device;
FIG. 5 shows an example method; and
FIG. 6 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Noise such as wind noise or other types of incoherent noise can be problematic in sound recordings. Noise can make it difficult to perform some types of processing on captured audio signals, for instance it can make it difficult to determine spatial audio parameters. This can lead to lower quality spatial audio. Examples of the disclosure provide methods of determining spatial audio parameters that are robust to noise levels.

The noise that affects the determining of the spatial parameters can be incoherent noise. The incoherent noise can vary rapidly as a function of time, frequency range and location. This can mean that if a first microphone is detecting significant amounts of incoherent noise, a different microphone in a different location might not be detecting very much incoherent noise. The microphone that is detecting the most noise can vary over time. As incoherent noise affects different microphone signals differently it is possible that if one microphone signal contains high levels of such noise a different microphone in the same device could still have low noise levels.

The incoherent noise levels could be caused by wind, handling noised caused by something touching one microphone and not other microphones (for example, a mask) or any other suitable type of noise.

Spatial audio enables spatial properties of a sound scene to be reproduced for a user so that the user can perceive the spatial properties. This can provide an immersive audio experience for a user or could be used for other applications.

To enable spatial audio to be rendered so that the use can perceive the spatial properties of the sound scene one or more spatial parameters can be determined. The spatial parameters can comprise information relating to the spatial properties of the sound scene, for instance they can comprise information indicating one or more directions of arrival of sound, information indicating the diffuseness of the sound scene, and/or any other suitable information.

The spatial parameters can be used to process audio signals to provide spatial audio signals.

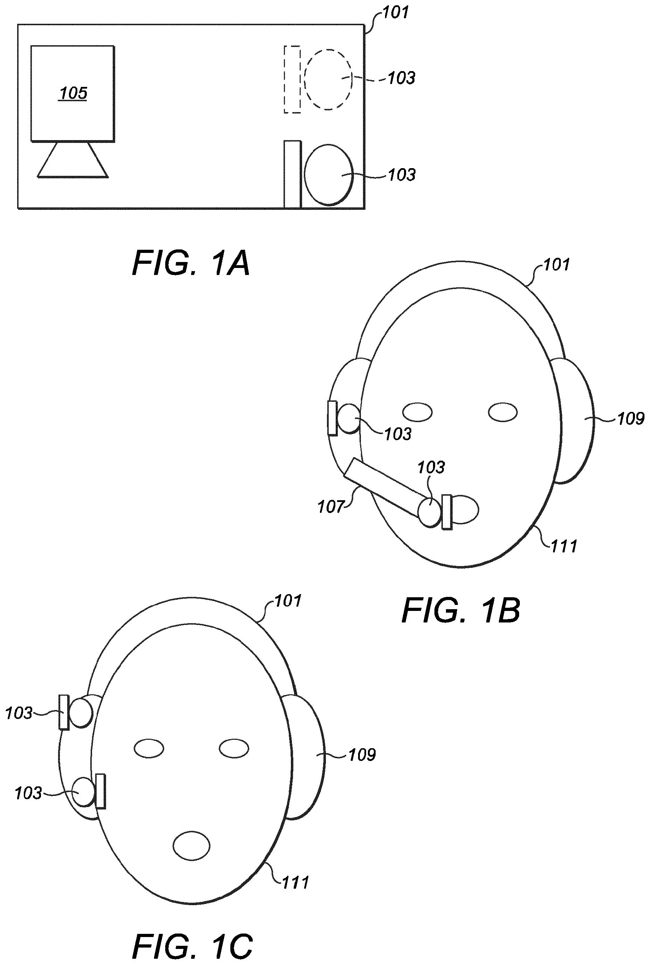

Figs. 1A to 1C show example devices 101 that can be used to obtain spatial audio signals. In these examples the devices 101 comprise a plurality of microphones 103. The plurality of microphones 103 are positioned relative to each other so as to enable the capture of audio signals that can be used for spatial audio. The audio signals provided by the microphones 103 comprise information about the spatial properties of the sound scene captured by the microphones 103.

In the example of Fig. 1A the device 101 is a mobile phone. The mobile phone comprises at least two microphones 103 and a camera 105. The mobile phone could comprise other numbers of microphones 103 in other examples.

In the example of Fig. 1A one of the microphones 103 is provided on the same side of the device 101 as the camera 105 and one of the microphones 103 is provided on the opposite side of the device 101 to the camera 105. This is indicated by the dashed lines in Fig. 1A.

Having the microphones 103 located on different sides of the device 101 can cause a delay in the signals detected by the respective microphones 103. This delay and/or any other suitable information can be used to determine spatial information about the sound scene.

In the example of Fig. 1B the device 101 is headphones. The headphones also comprise two microphones 103. The microphones are located in different locations on the headphones. In this example one of the microphones 103 is located on a boom 107 and one of the microphones 103 is located on a cup 109 of the headphones. When the headphones are worn by a user 111 the microphone 103 on the boom 107 is located close to the mouth of the user 111 but the microphone 103 on the cup 109 is located close to the user's ear.

In the example of Fig. 1C the device 101 is another set of headphones. The headphones in this example also comprise two microphones 103. In this example both of the microphones 103 are located on a cup 109 of the headphones however they are located on different parts of the cup. The microphones 103 are located on the cup 109 so that, when the user 111 is wearing the headphones one of the microphones 103 is closer to the user's mouth than the other microphone is.

Other types of devices 101 could be used in other examples. The microphones 103 could be located in other positions. In some examples the device 101 could comprise more than two microphones 103.

In examples of the disclosure any one or more of the microphones 103 in the devices 101 can be affected by incoherent noise. The incoherent noise could be wind noise, handling noise or any other suitable type of noise. In examples where the device 101 comprises microphones 103 that can be positioned close to a user's mouth the incoherent noise could comprise wind noise from the air and/or from the user 111 breathing. The noise levels can make it difficult to accurately determine spatial parameters from the audio signals captured by the respective microphones 103. This could result in poor quality spatial audio.

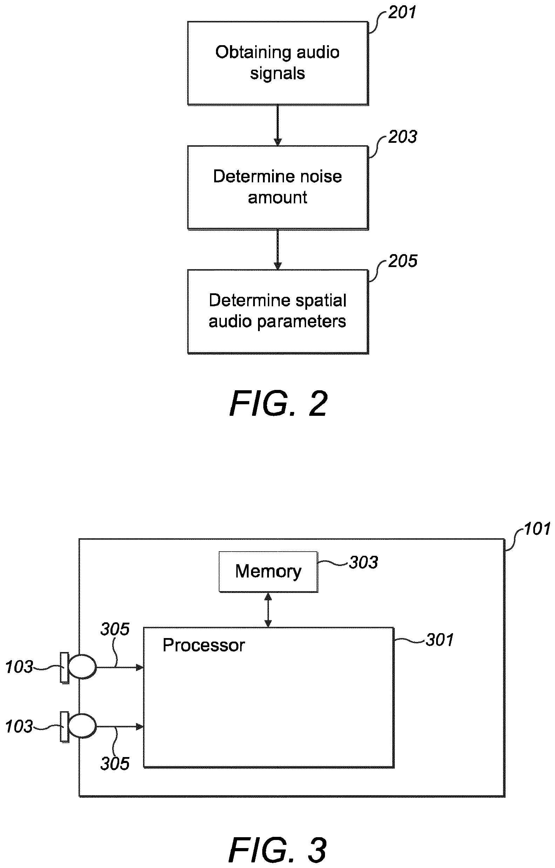

Fig. 2 shows an example method of determining spatial audio parameters. The method could be implemented using any suitable device 101 or apparatus.

At block 201 the method comprises obtaining two or more audio signals. The two or more audio signals can be captured by two or more microphones 103. The audio signals can be obtained in any suitable format.

The microphones 103 that have captured the two or more audio signals can be parts of devices 101 such as the devices 101 shown in Figs. 1A to 1C or could be part of any other suitable device 101 that comprises two or more microphones 103 that are positioned relative to each other so as to enable spatial audio to be captured.

At block 203 the method comprises determining a noise amount in the audio signals.

In some examples the noise comprises incoherent noise. The incoherent noise could be wind noise, handling noise, noise caused by a user 111 wearing masks, or noise caused by any other phenomenon or combinations of phenomena.

Any suitable method could be used to determine the noise amount. The determination of the noise amount could be made by comparing the signal levels of the audio signals from the respective microphones 103. These signals would not be adjusted before being used to determine the noise amount.

At block 205 the method comprises determining one or more spatial audio parameters. The process used to determine the one or more spatial audio parameters is dependent upon a value of the determined noise amount. If the noise amount has a first value a first process can be used to determine the one or more spatial audio parameters and if the noise amount has a second value, a second different process can be used to determine the one or more spatial audio parameters.

The spatial audio parameters can comprise information relating to the spatial properties of the sound scene that has been captured by the microphones. In some examples the spatial parameters can comprise, a direction parameter, a diffuseness parameter and/or any other suitable type of parameter.

The direction parameter can provide an indication of the direction of the sound sources within the sound field captured by the microphones. In some examples more than one direction parameter can be determined. This can provide information about the direction of different sounds.

The diffuseness parameter can provide an indication of how localised or non-localised the sound is. In some examples the diffuseness parameter can provide an indication of the levels of ambient noise in the sound scene. In some examples the diffuseness parameter can comprise a ratio of direct audio and ambient audio. In such cases a low diffuseness parameter can indicate that the sound is mainly directional and is not very diffuse, that is there are low levels of ambient noise. Conversely a high diffuseness parameter can indicate that the sound is mainly ambient and is not very direction, that is there are high levels of ambient noise.

In examples of the disclosure the process that is used to determine the one or more spatial audio parameters is dependent upon a value of the determined noise amount. Different methods can be appropriate to use for different determined noise amounts. This can take into account that diffuseness can be difficult to measure accurately unless the noise amount is low and that the direction of the sound source can also be difficult to estimate accurately if the noise amount is high.

In some examples the process used to determine the one or more spatial audio parameters can be dependent upon whether a value of the determined noise amount is above or below a threshold. In some examples there can be more than one threshold. For instance, there could be an upper threshold and a lower threshold. This can enable a range of different noise amounts to be taken into account.

As an example, if a value of the noise amount is determined to be below a lower threshold it can be assumed that the noise amount is low. In such cases a direction parameter and a diffuseness parameter could be estimated because it is expected that the noise would have little effect on these estimations. The respective parameters can be estimated from the audio signals that are captured by the microphones 103. In such cases the obtained estimation of both a direction parameter and a diffuseness parameter would be sufficiently accurate.

If a value of the noise amount is determined to be above a lower threshold but below an upper threshold it can be assumed that the noise amount is medium. In such cases the direction parameter can still be reliably estimated because it can be expected that the medium noise amount would have little effect on the estimation of the direction parameter. However, the medium noise amount would adversely affect the reliability of an estimation of the diffuseness parameter so an alternative method of obtaining the diffuseness parameter can be used. In some examples the alternative method of determining the diffuseness parameter could be to use a recent estimation of the diffuseness parameter. The recent estimation of the diffuseness parameter can have been obtained when the value of the noise amount was below the lower threshold. The recent estimation can be stored in a memory or other storage means and retrieved for use when the value of the noise amount is above the lower threshold.

If a value of the noise amount is determined to be above the upper threshold it can be assumed that the noise amount is high. In such cases it could be assumed that the noise amount would adversely affect the reliability of an estimation of both the direction parameter and the diffuseness parameter. In such cases an alternative method can be used to obtain both the direction parameter and the diffuseness parameter. For instance, a predetermined direction parameter could be used and a recent estimation of the diffuseness parameter could be used. The recent estimation could be obtained during a time interval where the value of the noise amount was low.

Any suitable method could be used to determine the predetermined direction parameter. The predetermined direction parameter can be predetermined in that it can be determined at an earlier time interval. The predetermined amount can change so that it can be updated during time intervals that have low noise values. In some examples the predetermined direction parameter could be predetermined based on a use case of the device 101. For instance, if the device 101 is a mobile device such as a phone being used to make a video call it can be assumed that the person talking is in the field of view of the camera. Therefore, it could be assumed that the user is holding the device 101 in front of their face. This information could be used to estimate a direction parameter.

If the device 101 is headphones the direction of the sound source can be predicted from the relative position of the user's mouth relative to the microphones 103 within the headphones.

In some examples the device 101 could comprise a plurality of cameras 105. Information indicative of the camera 105 currently in use could be used to infer the location of a sound source and from that direction information could be estimated.

In some examples the direction of the most important sound sources can be determined. The most important sound source could be dependent upon the use case of the device 101. In some examples the most important sound source could be assumed to be a user talking. In some examples the most important sound source could be assumed to be within a field of view of a camera. Other methods for determining a most important sound source could be used in examples of the disclosure.

In some examples the spatial audio parameters can comprise a first direction parameter and a second direction parameter. This could be the case if there are two important sound sources in the sound scene. In such cases the process used to determine the first direction parameter and the second direction parameter can be dependent upon a value of the noise amount. In some examples a different process could be used to determine the first direction parameter compared to the second direction parameter dependent upon a value of the determined noise amount.

As an example, the first direction parameter and the second direction parameter can be estimated if the value of the determined noise amount is below a lower threshold. It is expected that the noise would have little effect on these estimations. In such cases the obtained estimation of both of the direction parameters would be sufficiently accurate.

If a value of the noise amount is determined to be above a lower threshold but below an upper threshold it can be assumed that the noise amount is medium. In such cases the first direction parameter can be estimated and a predetermined angular difference to the first direction parameter can be used to determine the second parameter. In such cases it can be expected that the medium noise amount would have little effect on the estimation of the first direction parameter but that the medium noise amount would adversely affect the reliability of the estimation of the second direction parameter. In such cases the second direction could be set to a different direction to the first direction. This might not be the correct direction but can reduce interference between the sound sources so that they are both intelligible to the user.

If a value of the noise amount is determined to be above the upper threshold it can be assumed that the noise amount is high. In such cases it could be assumed that the noise amount would adversely affect the reliability of an estimation of both the direction parameters. In such cases an alternative method can be used to obtain the first direction parameter. For instance, a predetermined direction parameter could be used. A predetermined angular difference to the first direction parameter can then be used to determine the second parameter.

Fig. 3 schematically shows an example device 101 that could be used to implement examples of the disclosure.

The device 101 comprises two microphones 103, a processor 301 and a memory 303. Only components of the device 101 that are referred to in this description are shown in Fig. 3. The device 101 could comprise other components that are not shown in Fig. 3. For example, the device 101 could comprise loudspeakers, power sources, user interfaces and/or any other suitable components.

The device 101 could be any device 101 that comprises two or more microphones 103. For example, the device 101 could be a mobile phone, a table computer, headphones or any other suitable type of device 101.

In the example of Fig. 3 the device 101 comprises two microphones 103. In other examples the device 101 could comprise more than two microphones 103. In the example of Fig. 3 the microphones 103 are indicated as being adjacent to each other however the microphones 103 can be located in any suitable locations on the device 101 so as to enable the capture of spatial audio.

The microphones 103 can comprise any means that can be configured to detect audio signals. The microphones 103 can be configured to detect acoustic sound signals and convert the acoustic signals into an output electric signal. The microphones 103 therefore provide microphone signals 305 as an output. The microphone signals 305 can comprise audio signals.

The audio signals from the microphones 103 can be processed to determine spatial audio parameters and to provide a spatial audio signal.

The audio signals from the microphones 103 can be processed to determine a noise amount in the audio signals.

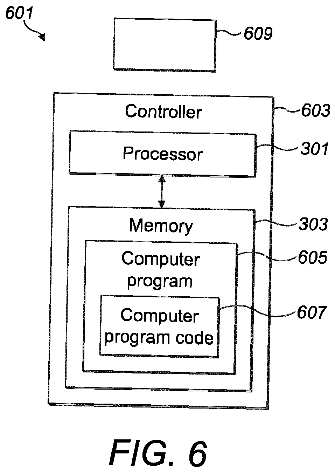

The processor 301 is configured to read from and write to the memory 303. Examples of a processor 301 and a memory 303 are shown in more detail in Fig. 6.

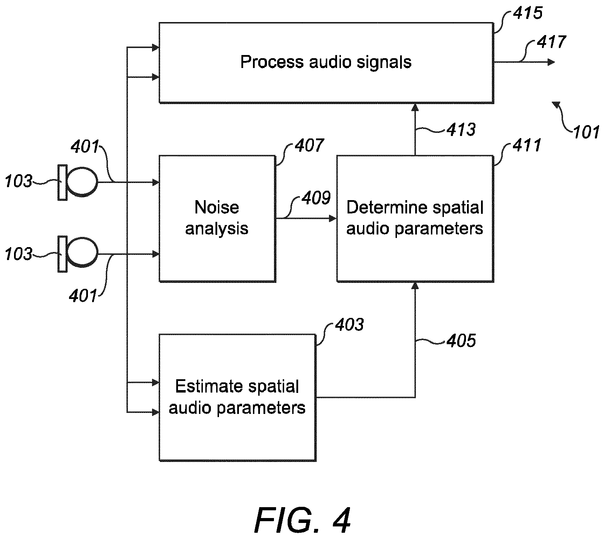

Fig. 4 schematically shows an example device 101. Fig. 4 shows functional modules of a device 101. The functional modules can be provided by the processor 301 and memory 303 and/or by any other suitable means.

In the example of Fig. 4 the device 101 comprises a plurality of microphones 103. Two microphones 103 are shown in Fig. 4 but more than two microphones 103 could be used in other examples of the disclosure. The microphones 103 can be located in any suitable locations within the device 101 that enable capture of spatial audio.

The microphones 103 provide audio signals 401 as inputs. The respective microphones 103 provide respective audio signals 401. The two or more audio signals 401 comprise information about spatial characteristics of the sound scene captured by the microphones 103.

The audio signals are provided as input to an estimate spatial audio parameters block 403. The estimate spatial audio parameters block 403 is configured to estimate the relevant spatial audio parameters.

The spatial audio parameters that are determined by the estimate spatial audio parameters block 403 can comprise any suitable parameters that can be used to process the audio signals 401 so as to generate spatial audio signals. The spatial audio signals can be configured to provide spatial characteristics that are perceptible to a user when the spatial audio signals are played back to a user.

In some examples the spatial audio parameters can comprise one or more direction parameters and a diffuseness parameter. The direction parameters and the diffuseness parameter give information about the spatial characteristics of the sound scene captured by the microphones 103. The direction parameters give information indicating the direction of the sound sources relative to the microphones 103. The diffuseness parameter gives an indication of how localized or non-localized sound is. This can give an indication of the level of ambient sound in the sound scene. The diffuseness parameter could comprise a ratio of direct sound to ambient sound or a value derived from a ratio of direct sound to ambient sound. Other spatial audio parameters, or combination of spatial audio parameters could be used in other examples of the disclosure.

Any suitable process or method can be used to estimate the direction parameters and the diffuseness parameter.

In some examples the spatial audio parameters block 403 can also be configured to write to and read from a memory 303. The memory could be the memory of the device 101 as shown in Fig. 3 or any other suitable memory. This can enable spatial audio parameters such as the direction parameter and/or the diffuseness parameter to be stored in the memory 303. This can enable parameters determined by the spatial audio parameters block 403 to be stored in the memory 303 and retrieved for use at a later point. This can enable recent estimates of the direction parameter and/or the diffuseness parameter to be used when current estimates are not available and/or for any other suitable purpose.

The estimate spatial audio parameters block 403 is configured to provide estimated spatial audio parameters 405 as an output.

The audio signals 401 are also provided to a noise analysis block 407. The noise analysis block 407 is configured to use the audio signals 401 to determine a noise amount in the audio signals 401. The noise analysis block 407 can be configured to determine a value for the noise amount in the audio signals 401.

The noise analysis block 407 can be configured to categorize the noise amount. For instance, it can be configured to categorize whether the noise amount is high, medium or low. Any suitable thresholds can be used for the boundaries between the respective categories. In some examples there could be a different number of categories for the noise amount.

In some examples the noise amount can be determined based on a level difference between respective audio signals 401. A value for the noise amount could indicate the level difference between respective audio signals 401. In such cases a level difference below 7dB can be categorized as a low noise amount, a level difference between 7 to 15 dB can categorized as a high noise amount and a level difference above 15dB can be categorized as a high noise amount. Other methods for determining the noise amount and/or boundaries for the categories can be used in other examples of the disclosure.

The noise analysis block 407 is configured to provide a noise amount 409 as an output. The noise amount could be provided as a value, as an indication of a category for the noise amount, and/or in any other suitable format. For example, the noise amount 409 could indicate whether the noise amount is high, medium, or low, or in any other suitable category.

The spatial audio parameters 405 and the noise amount 409 are provided as inputs to a determine spatial audio parameters block 411. The determine spatial audio parameters block 411 can be configured to select a process to use to determine the spatial audio parameters based on the noise amount 409. The process that is selected to determine the spatial audio parameters is selected based on the noise amount 409.

For example, if the noise amount 409 indicates a low noise amount then it can be assumed that the noise has little effect on the spatial audio parameters 405 that have been estimated by the estimate spatial audio parameters block 403. Therefore, the spatial audio parameters 405 that have been estimated by the estimate spatial audio parameters block 403 can be considered to be sufficiently accurate for use in spatial audio processing. The determine spatial audio parameters block 411 therefore selects to use the estimated spatial audio parameters 405 if the noise amount is low.

If the noise amount 409 indicates a medium noise amount then it can be assumed that the noise has some effect on the spatial audio parameters 405 that have been estimated by the estimate spatial audio parameters block 403. It can be expected that the medium noise amount would have little effect on the estimation of the direction parameter but that the medium noise amount would adversely affect the reliability of an estimation of the diffuseness parameter.

In this case different spatial audio parameters are affected by the noise amount to different extents. Therefore, different processes for determining the respective spatial audio parameters are selected by the determine spatial audio parameter block 411. For instance, an estimated spatial audio parameter could be used for one of the spatial audio parameters while a predetermined or reference parameter could be used for another spatial audio parameter. The estimated spatial audio parameters can be estimated by processing the audio signals 401 while the other processes for determining spatial audio parameters could use other information such as use cases of the device 101, or historical information about spatial audio parameters or any other suitable information.

In the example of Fig. 4 the estimate of the direction parameter that has been made by the estimate spatial audio parameters block 403 can be considered to be sufficiently accurate for use in spatial audio processing. However, the estimate of the diffuseness parameter that has been made by the estimate spatial audio parameters block 403 can be considered to be not sufficiently accurate for use in spatial audio processing. In this case the determine spatial audio parameters block 411 selects to use the estimated direction parameter but selects a different process for determining the diffuseness parameter if the noise amount is medium.

The alternative method of determining the diffuseness parameter could be to use a recent estimation of the diffuseness parameter that has been obtained by the estimate spatial audio parameter module 403. The recent estimation of the diffuseness parameter can have been obtained when the value of the noise amount was below the lower threshold. The recent estimation can be stored in a memory 303 or other storage means and retrieved for use when the value of the noise amount is above the lower threshold.

If the noise amount 409 indicates a high noise amount then it can be assumed that the noise has some effect on all of the spatial audio parameters 405 that have been estimated by the estimate spatial audio parameters block 403. It can be expected that the high noise amount would adversely affect the reliability of an estimation of both the direction parameter and the diffuseness parameter. In this case the determine spatial audio parameters block 411 selects not to use the estimated spatial audio parameters and selects a different process for determining the spatial audio parameters if the noise amount is high. For instance, a predetermined direction parameter could be used and a recent estimation of the diffuseness parameter could be used. The recent estimation could be obtained by the estimate spatial audio parameters module 403 during a time interval where the value of the noise amount was low.

The determine spatial audio parameters block 411 is configured to provide determined spatial audio parameters 413 as an output.

The device 101 is configured so that the determined spatial audio parameters 413 are provided as an input to the process audio signal block 419. The device 101 is also configured so that the process audio signal block 419 also receives the audio signals 401 as an input.

The process audio signal block 419 can be configured to perform any suitable processing on the audio signals 401. In examples of the disclosure the process audio signal block 419 can be configured to perform spatial audio processing so as to generate a spatial audio signal. The determined spatial audio parameters 413 can be used to process the audio signals 401 to generate the spatial audio signal.

The process audio signal block 419 can also be configured to perform other suitable types of processing on the audio signals. For instance, in some examples the process audio signal block 419 can be configured to perform noise reduction on the audio signals 401. Other type of processing could be performed in other examples.

The process audio signal block 419 is configured to provide a processed audio signal 417 as an output. The apparatus 101 can be configured to enable the processed audio signal 417 to be stored and/or provided as an output. For instance, the processed audio signal could be played back for a user via any suitable playback means or could be stored in a memory 303 for later use. In some examples the processed audio signal 407 could be processed so at to enable it to be transmitted to another device 101.

Variations of the device 101 could be used in examples of the disclosure. For instance, the blocks could be combined or modified as appropriate. In some examples different devices 101 could comprise one or more of the blocks.

In some examples the estimate two or more spatial audio parameters block 403 can be configured to detect more that one direction parameter. For instance, a first direction parameter can be estimated for a loudest sound source and a second direction parameter can be estimated for the second loudest sound source. The different sound sources could be different types of sound. For instance, the loudest sound source could be speech and the second loudest sound source could be other sound sources. This could be the case in IVAS (Immersive Voice and Audio Service) codec which could have an object and ambience mode. In these cases a first direction is estimated for a sound object and a second direction is estimated for other sounds that could be ambient sounds. In many use cases the sound object would be speech but other sound objects could be used in other examples. In these cases the second direction can be more difficult to estimate because the second sound source is not as loud as the first sound source and also if the second sound source comprises ambient sounds these might not have a clear direction. Therefore, it might only be possible to reliably determine a direction for the second sound source if the noise amount is low.

The device shown in Fig. 4 can be used for cases where one direction parameter is estimated or if more than one direction parameter is estimated. If more than one direction parameter is estimated then the determine spatial audio parameters block 411 can be configured to detect a process to use to determine each of the direction parameters. The determine spatial audio parameters block 411 can be configured to select different processes for different direction parameters dependent upon the noise amount 409.

The first direction parameter and the second direction parameter can be estimated if the value of the determined noise amount is below a lower threshold. It is expected that the noise would have little effect on these estimations. In such cases the obtained estimation of both of the direction parameters would be sufficiently accurate.

If the noise amount 409 indicates a low noise amount then it can be assumed that the noise has little effect on any of the direction parameters that have been estimated by the estimate spatial audio parameters block 403. Therefore, both the first direction parameter and the second direction parameter that have been estimated by the estimate spatial audio parameters block 403 can be considered to be sufficiently accurate for use in spatial audio processing. The determine spatial audio parameters module 411 therefore selects to use the estimated direction parameters for both the first direction and the second direction if the noise amount is low.

If the noise amount 409 indicates a medium noise amount then it can be assumed that the noise has some effect on the second direction parameter which is more susceptible to noise. It can be expected that the medium noise amount would have little effect on the estimation of the first direction parameter but that the medium noise amount would adversely affect the reliability of an estimation of the second direction parameter.

In this case the different direction parameters are affected by the noise amount to different extents. Therefore, different processes for determining the respective direction parameters are selected by the determine spatial audio parameter block 411. For instance, an estimated spatial audio parameter could be used for one of the first direction parameters while a different process could be used to determine the second direction parameter.

In some examples the second direction could be set to a different direction to the first direction. This could be achieved by adding a predetermined angle to the first direction. For instance, the second direction could be set to a given angle to the left or right of the first direction. The given angle could by 90°, 180° or any other suitable angle This might not be the correct direction for the second direction but it can ensure that two different directions are used and can reduce interference between the sound sources so that they are both intelligible to the user. Having the correct direction for the second direction might not be as important as having a correct direction for the first direction because the second direction is associated with a quieter sound that could be less localized than the first sound source.

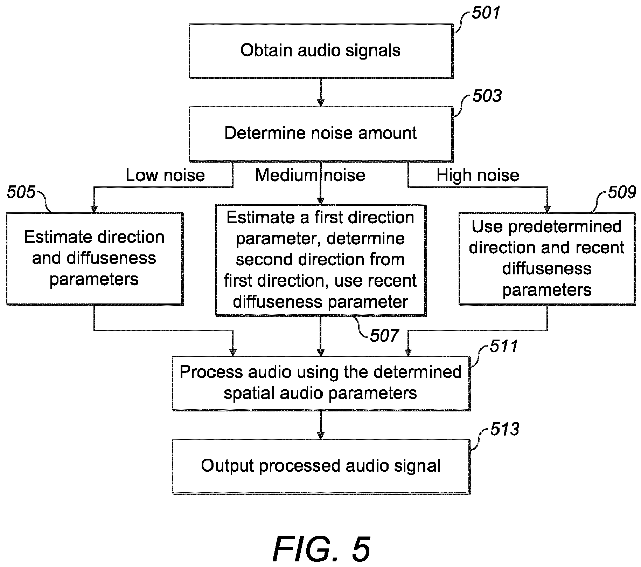

Fig. 5 shows an example method for determining spatial audio parameters according to examples of the disclosure. The method could be implemented using devices 101 such as the devices shown in Figs. 1A to 1C, and/or Figs. 3 to 4.

At block 501 the method comprises obtaining two or more audio signals 401. The audio signals 401 can be obtained from microphones 103 that are located in or on the same device 101. In the example of Fig. 5 two audio signals 401 are obtained. In some examples more than two audio signals 401 could be obtained.

The audio signals 401 can be processed in small time-frequency tiles. The small time-frequency tiles can be obtained by framing the audio signals in time frames of given length. In some examples the time frames could be 20ms in duration. Other lengths can be used for the time frames in other examples. The time frames can then be transformed into the frequency domain using any suitable transformation. In some examples the time frames can be transformed to the frequency domain using filter banks such as Fast Fourier Transform (FFT), Modified Discrete Cosine Transform (MDCT), Discrete Cosine Transform (DCT), and/or any other suitable type of filterbank. The frequency domain representation may be divided into frequency bands using Bark band, Equivalent Rectangular Band (ERB) or third-octave band or any suitable division. The framed bands of audio are referred to as time-frequency tiles. Other processes and means for creating similar types of tiles can be used in various implementations of the disclosure. Once the processing of the audio signals 401 has been completed the frequency signals can be converted back into the time domain. The process that is used for converting the frequency signal back into the time domain can comprise a corresponding transformation to the transformation used to convert the audio signals 401 into the frequency domain.

At block 503 a noise amount in the audio signals 401 is determined. Any suitable process can be used to determine the noise amount. For instance, the relative levels of the respective audio signals 401 can be compared. In examples of the disclosure the noise amounts that are determined are incoherent noise. The incoherent noise can be noise that varies rapidly over time and location so that it causes level differences between the respective audio signals 401. In some examples the noise could be wind noise, handling noise or any other suitable type of noise.

The determined noise amount is used to select a process for determining spatial characteristics such as one or more direction parameters and a diffuseness parameter. In the example of Fig. 5 two direction parameters and one diffuseness parameter are determined. Other numbers and/or type of parameters could be determined in other examples.

The estimation of a first direction parameter can be relatively robust in the presence of incoherent noise especially if the estimation of the direction is made using phase differences between audio signals. This can enable direction parameters to be estimated in both low noise levels and medium noise levels but not for high noise levels.

The estimation of a second direction parameter might not be as robust in the presence of incoherent noise as the estimation of the first direction parameter. This can be because the second direction parameter is not a loud and/or because the second sound source could comprise ambient sound. Therefore, the second direction parameters would only be estimated for low noise levels but not for medium or high noise levels.

The estimation of a diffuseness parameter is also not as robust in the presence of incoherent noise as the estimation of a first direction parameter. Incoherent noise such as wind noise makes the audio signals 401 uncorrelated and the estimation of the diffuseness parameter is based on correlation calculation. Therefore, the diffuseness parameters would only be estimated for low noise levels but not for medium or high noise levels.

In the example of Fig. 5 the determined noise amount is categorized into three categories. If the noise amount is below a lower threshold the noise amount can be assumed to be low. If the noise amount is above the lower threshold but below a higher threshold the noise amount can be assumed to be medium. If the noise amount is above the higher threshold the noise amount can be assumed to be high. The thresholds that are used for the respective categories can be determined based on the positions of the microphones 103 within the device 101, how the microphones 103 are integrated into the device 101, the shape of the device 101, and/or any other suitable factor. In examples where the noise is wind noise low wind noise conditions could be 0-3 m/s wind, medium wind noise conditions could be 3-6 m/s wind and high wind noise conditions could be >6m/s. Other values for the thresholds could be used in other examples. In some examples there could be more than three categories for the noise amounts and the respective thresholds could take that into account.

If it is estimated that the noise amount is low then at block 505 the first direction parameter is estimated, the second direction parameter is estimated and the diffuseness parameter is also estimated. Any suitable process can be used to estimate the respective direction and diffuseness parameters.

If the noise amount is determined to be medium then at block 507 the direction parameter is estimated but a different process is used to determine the second direction parameter and the diffuseness parameter.

The second direction parameter can be determined based on the estimated first direction parameter. For example, the first direction parameter can be adjusted by a set angle to determine a second direction parameter. In some examples the set angle could be 90°, 180° or any other suitable angle. The angle that is used as the set angle can be selected so that the sounds in the first direction are still clearly perceptible over the sounds in the second direction.

In some examples the diffuseness parameter can be determined based on a recent estimate of the diffuseness parameter. The recent estimate of the diffuseness parameter can be one that is obtained during a time period when the noise amount is low. This method of determining the diffuseness parameter can be sufficiently accurate because diffuseness tends to change slowly over time compared to the direction so that comparatively old estimates of the diffuseness parameter can be used.

As an alternative or addition, in some examples the diffuseness parameter could be estimated from audio signals 401 obtained by a different pair of microphones 103 within the device 101. The use of different audio signals 401 might be appropriate if the different audio signals 401 have low noise amounts.

As another alternative or addition, in some examples the diffuseness parameter can be set to a predetermined value. The predetermined value can be determined based on the estimated first direction and/or any other suitable factor. For example, the diffuseness parameter could indicate a high level of diffuseness if the first direction parameter indicates that the first sound source is at the rear of the device 101. If the diffuseness parameter is a ratio of direct sound to ambient sound then a high level of diffuseness would have a direct to ambient ratio that is close to zero. Similarly, the diffuseness parameter could indicate a low level of diffuseness if the first direction parameter indicates that the first sound source is at the front of the device 101. If the diffuseness parameter is a ratio of direct sound to ambient sound then a low level of diffuseness would have a direct to ambient ratio that is close to one. Suitable values could be automatically selected for cases where the first direction is at the rear of the device and cases where the first direction is at the front of the device. For instance, a direct to ambient ratio of 0.75 could be used the first direction is at the front of the device 101 and a direct to ambient ratio of 0.25 could be used if the first direction is at the rear of the device 101.

Other processes and/or combinations of processes for determining the diffuseness parameter could be used in other examples.

If it is estimated that the noise amount is high then at block 509 predetermined directions are used for the direction parameters. The predetermined direction for the first direction parameter can be determined based on a current use case of the device 101 or any other suitable factor. For instance, if the device101 is a mobile phone being used for a video call it can be assumed that the most important sound source will be the user speaking and that the user will be in the field of view of the camera 105. Therefore, the positions of the camera 105 can be used to infer the direction of the sound source. As another example, if the device 101 is being used to film video content then it can be assumed that the important sound source is also in the field of view of the camera 105. If the device 101 is being used to make a voice call it can be assumed that the device 101 is positioned close to the user's head and that the most important sound source will be the user talking. In such cases a mouth reference point can be used to determine the first direction parameter. The mouth reference point can be an expected position of the user's mouth when they are using the device 101 to make the voice call (or perform any other relevant function).

If the device 101 is headphones then it can be assumed that the most important sound source is likely to be the user talking and the relative position of the user's mouth with respect to the microphones 103 can be predetermined based on the geometry of the headphones and/or a mouth reference point. Other examples for estimating a predetermined direction for a first sound source can be used in other examples of the disclosure.

The predetermined direction for the second direction parameter can be determined by adding a set angle to the predetermined first direction parameter. This can be similar to the process for adding a set angle to the predetermined first direction parameter at the medium noise levels.

The methods for determining the diffuseness parameter at a high noise level can be the same, or similar, as those used for the methods for determining the diffuseness parameter at the medium noise levels.

The following tables sets out methods that can be used to estimate the direction parameter and the diffuseness parameter in different noise conditions. Other methods and conditions for using the methods could be used in examples of the disclosure.

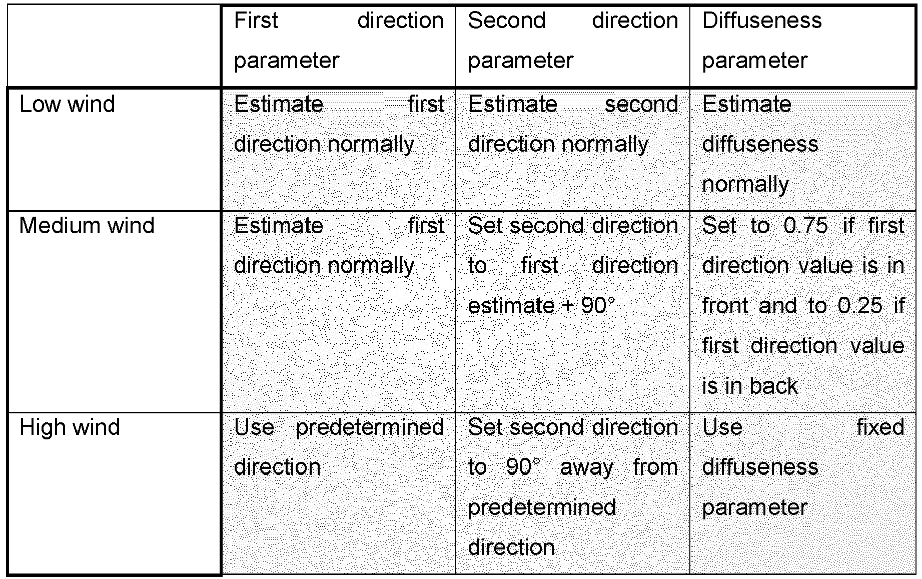

In this example, if the noise levels are too high to reliably determine the second spatial audio parameter then, instead of estimating the direction parameter or retrieving a historical direction parameter from an earlier time frame, the second direction parameter is determined based on the first direction parameter. The first direction parameter upon which the second direction parameter is based is determined from the same time instance and frequency.

Once the direction parameters and the diffuseness parameter have been determined the respective parameters can be used, at block 511, to process the audio signals 401 to generate spatial audio signals. Other types of processing can also be performed on the audio signals 401 such a noise reduction and/or any other suitable processing.

Once the spatial audio processing has been performed the signals can be converted back to the time domain and spatial signal can be provided as an output at block 513.

Examples of the disclosure therefore enable spatial audio parameters to be determined even in the presence of incoherent noise such as wind noise. This can enable high quality spatial audio to be provided even in the presence of incoherent noise such as wind noise.

Fig. 6 schematically illustrates an apparatus 601 that can be used to implement examples of the disclosure. In this example the apparatus 601 comprises a controller 603. The controller 603 can be a chip or a chip-set. In some examples the controller 603 can be provided within a device comprising two or more microphones 103 such as a communications device or any other suitable type of device 101.

In the example of Fig. 6 the implementation of the controller 603 can be as controller circuitry. In some examples the controller 603 can be implemented in hardware alone, have certain aspects in software including firmware alone or can be a combination of hardware and software (including firmware).

As illustrated in Fig. 6 the controller 603 can be implemented using instructions that enable hardware functionality, for example, by using executable instructions of a computer program 605 in a general-purpose or special-purpose processor 301 that can be stored on a computer readable storage medium (disk, memory etc.) to be executed by such a processor 301.

The processor 301 is configured to read from and write to the memory 303. The processor 301 can also comprise an output interface via which data and/or commands are output by the processor 301 and an input interface via which data and/or commands are input to the processor 301.

The memory 303 is configured to store a computer program 605 comprising computer program instructions (computer program code 607) that controls the operation of the controller 603 when loaded into the processor 301. The computer program instructions, of the computer program 605, provide the logic and routines that enables the controller 603 to perform the methods shown in the Figs. and/or described herein or any other suitable methods. The processor 301 by reading the memory 303 is able to load and execute the computer program 605.

The apparatus 601 therefore comprises: at least one processor 301; and at least one memory 303 including computer program code 607, the at least one memory 303 storing instructions 607 that, when executed by the at least one processor 301, cause the apparatus 601 at least to perform:
obtaining two or more audio signals and processing the audio signals to generate spatial audio signals;
determining a noise amount in the audio signals;
determining one or more spatial audio parameters wherein the process used to determine the one or more spatial audio parameters is dependent upon a value of the determined noise amount.

As illustrated in Fig. 6 the computer program 605 can arrive at the controller 603 via any suitable delivery mechanism 609. The delivery mechanism 609 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 605. The delivery mechanism can be a signal configured to reliably transfer the computer program 605. The controller 603 can propagate or transmit the computer program 605 as a computer data signal. In some examples the computer program 605 can be transmitted to the controller 603 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 605 comprises computer program instructions for causing an apparatus 601 to perform at least the following:
obtaining two or more audio signals and processing the audio signals to generate spatial audio signals;
determining a noise amount in the audio signals;
determining one or more spatial audio parameters wherein the process used to determine the one or more spatial audio parameters is dependent upon a value of the determined noise amount.

The computer program instructions can be comprised in a computer program 605, a non-transitory computer readable medium, a computer program product, a machine readable medium. In some but not necessarily all examples, the computer program instructions can be distributed over more than one computer program 605.

Although the memory 303 is illustrated as a single component/circuitry it can be implemented as one or more separate components/circuitry some or all of which can be integrated/removable and/or can provide permanent/semi-permanent/ dynamic/cached storage.

Although the processor 301 is illustrated as a single component/circuitry it can be implemented as one or more separate components/circuitry some or all of which can be integrated/removable. The processor 301 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software can not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The apparatus 601 as shown in Fig. 6 can be provided within any suitable device 101. In some examples the apparatus 601 can be provided within an electronic device such as a mobile telephone, a teleconferencing device, a camera, a computing device or any other suitable device. In some examples the apparatus is the device or is an electronic device such as a mobile telephone, a teleconferencing device, a camera, a computing device or any other suitable device.

The blocks illustrated in Figs. 2 and 4 and 5 can represent steps in a method and/or sections of code in the computer program 605. The illustration of a particular order to the blocks does not necessarily imply that there is a required or preferred order for the blocks and the order and arrangement of the blocks can be varied. Furthermore, it can be possible for some blocks to be omitted.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', `can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use `a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
obtaining two or more audio signals;
determining a noise amount in the audio signals;
determining one or more spatial audio parameters wherein the process used to determine the one or more spatial audio parameters is dependent upon the determined noise amount;
processing the two or more audio signals with the determined one or more spatial audio parameters according to the determined noise amount; and
generating spatial audio signals based on the processed two or more audio signals.

2. An apparatus as claimed in claim 1, wherein the process used to determine the one or more spatial audio parameters is dependent upon whether a value of the determined noise amount is above or below a threshold.

3. An apparatus as claimed in claim 1, wherein the means are for estimating the one or more spatial audio parameters if a value of the determined noise amount is below a threshold.

4. An apparatus as claimed in claim 1, wherein the means are for using a predetermined value for the one or more spatial audio parameters if a value of the determined noise amount is above a threshold.

5. An apparatus as claimed in claim 1, wherein the spatial audio parameters comprise at least a direction parameter and a diffuseness parameter.

6. An apparatus as claimed in claim 5, wherein the means are for estimating the direction parameter and the diffuseness parameter if a value of the determined noise amount is below a lower threshold.

7. An apparatus as claimed in claim 5, wherein the means are for estimating the direction parameter and using a recent estimation of the diffuseness parameter if a value of the determined noise amount is above a lower threshold but below an upper threshold.

8. An apparatus as claimed in claim 5, wherein the means are for using a predetermined direction parameter and a recent estimation of the diffuseness parameter if a value of the determined noise amount is above an upper threshold.

9. An apparatus as claimed in claim 1, wherein the spatial audio parameters comprise at least a first direction parameter and a second direction parameter.

10. An apparatus as claimed in claim 9, wherein the means are for estimating the first direction parameter and the second direction parameter if a value of the determined noise amount is below a lower threshold.

11. An apparatus as claimed in claim 9, wherein the means are for estimating the first direction parameter and using a predetermined angular difference to the first direction parameter to determine the second parameter if a value of the determined noise amount is above a lower threshold but below an upper threshold.

12. An apparatus as claimed in claim 9, wherein the means are for using a predetermined first direction parameter and a predetermined angular difference to the first direction parameter to determine the second parameter if a value of the determined noise amount is above an upper threshold.

13. An apparatus as claimed in claim 12, wherein the predetermined first direction is determined based upon a use case of a device comprising microphones.

14. An apparatus as claimed in any preceding claim, wherein the apparatus comprises two or more microphones.

15. A method comprising:
obtaining two or more audio signals;
determining a noise amount in the audio signals;
determining one or more spatial audio parameters wherein the process used to determine the one or more spatial audio parameters is dependent upon the determined noise amount;
processing the two or more audio signals with the determined one or more spatial audio parameters according to the determined noise amount; and
generating spatial audio signals based on the processed two or more audio signals.
